# EUROPÄISCHE PATENTSCHRIFT

(11) **EP 0 492 294 B1**
(45) Veröffentlichungstag und Bekanntmachung des Hinweises auf die Patenterteilung: **16.09.1998**
(21) Anmeldenummer: 91121287.6
(22) Anmeldetag: 11.12.1991
(51) Int. Cl.: G02B 6/255

(54) **Krimpspleiss**
Crimp splice
Epissure de sertissage

(30) Priorität: 20.12.1990 DE 4041030
(43) Veröffentlichungstag der Anmeldung: 01.07.1992
(73) Patentinhaber: SIEMENS AKTIENGESELLSCHAFT, 80333 München (DE)
(72) Erfinder: Finzel, Lothar, Dipl.-Ing., W-8044 Unterschleissheim (DE)

(56) Entgegenhaltungen:
- EP-A- 65 096
- EP-A- 338 758
- DE-A- 3 716 792
- FR-A- 2 390 746
- US-A- 4 211 470
- US-A- 4 824 197

## Beschreibung

Es sind verschiedene mechanische Spleißverbindungen für Lichtwellenleiter bekannt. So ist in dem US-Patent 4,818,055 eine Spleißverbindung beschrieben, bei der die Lichtwellenleiter-Faser (Kern und Mantel) in einem u-förmig gebogenen Spleißelement geführt und geklemmt wird. Das Spleißelement ist Teil einer Spleißverbindung, die außerdem noch ein Gehäuse und Befestigungseinrichtungen für das Spleißelement und die Lichtwellenleiter enthält. Diese Spleißverbindung ist sehr aufwendig. Außerdem bedarf es einer engen Tolerierung der Bauelemente, um die Lichtwellenleiter-Fasern mit einem bestimmten Anpreßdruck zu fixieren.

Aufgabe der Erfindung ist es daher, einen einfach herstellbaren mechanischen Spleiß anzugeben.

Diese Aufgabe wird durch einen Krimpspleiß nach Anspruch 1 gelöst. Vorteilhafte Ausbildungen der Erfindung sind in den Unteransprüchen angegeben.

Vorteilhaft ist der einfache Aufbau des Krimpspleißes. Dieser gewährleistet auch ein einfaches Spleißen der Lichtwellenleiter mit einem einfachen Werkzeug.

Besonders vorteilhaft ist, wenn das Innenteil und das Außenteil des Krimpspleißes (krimpen = pressen) aus u-förmig gebogenen Blechen hergestellt wird. Nach dem Einführen des Lichtwellenleiters werden die Schenkel der beiden Teile zusammengebogen. Hierdurch wird der erforderliche radiale Anpreßdruck für die Lichtwellenleiter-Fasern erzeugt.

Vorteilhaft ist es, wenn ein Teil, beispielsweise das Außenteil, länger als das andere Teil ausgebildet ist und Führungseinrichtungen für die Lichtwellenleiter-Faser aufweist. Hierdurch wird das Einlegen in die Führungsnut wesentlich erleichtert.

Vorteilhaft ist es, wenn die Grundfläche des Außenteils nach innen gewölbt ist oder/und die Grundfläche des Innenteils nach außen gewölbt ist. Hierdurch enstehen Hohlräume in den Ecken der u-förmigen Teile, die ein Austreten der zum Spleißen benötigten Ankopplungsflüssigkeit, die auf den Brechungsindex der LWL-Kerne abgestimmt ist, aufgrund des Kapillareffektes verhindern.

Zweckmäßig ist eine mechanische Befestigung des Innen- und des Außenteiles durch formschlüssige Verbindungselemente wie beispielsweise Falze, Laschen, Aussparungen, Durchzüge oder Sicken. Auf Schraub- oder Nietverbindungen kann hierdurch verzichtet werden, und das Spleißen besteht lediglich darin, das Innenteil in das Außenteil weiter hineinzudrücken und die Schenkel zusammenzubiegen.

Es ist zweckmäßig zwei Rasterstufen zwischen Innen- und Außenteil vorzusehen. In der ersten Rasterstufe erfolgt das Einführen der Lichtwellenleiter-Fasern, und in der zweiten Rasterstufe werden die Lichtwellenleiter-Fasern bereits vorfixiert. Der erforderliche Anpreßdruck zum Fixieren der Fasern wird dann durch Zusammenpressen der Schenkel des Außenteiles erzeugt.

Es ist vorteilhaft, wenn das Innenteil aus einem dünneren elastischen Blech hergestellt wird, während das Außenteil aus einem biegbaren Blech mit geringerer Elastizität gefertigt wird.

Es ist ebenfalls möglich, das Innenteil als Quader oder als Hohlprofil, beispielsweise auch aus Plastikmaterial, herzustellen. Das Außenprofil kann auch eine wesentlich breitere Grundfläche als das Innenprofil aufweisen, um das es dann herumgebogen wird.

Es ist zweckmäßig, wenn die verwendeten Bleche einen geringen Wärmeausdehnungskoeffizienten haben. Hierdurch ändert sich der Anpreßdruck bei Temperaturschwankungen nur wenig.

Vorteilhaft ist es, wenn die im Innenteil oder im Außenteil vorgesehenen Führungsnuten zum Einlegen der Lichtwellenleiter-Fasern an ihren Enden so erweitert sind, daß die Lichtwellenleiter mit Coating geführt und gegebenenfalls auch zur Zugentlastung angepreßt werden können. Hierdurch wird nicht nur das Einführen der Lichtwellenleiter-Fasern erleichtert; durch die erweiterten Führungsnuten ergibt sich automatisch auch ein Knickschutz und gegebenenfalls eine Zugentlastung.

Zweckmäßig ist es, zwei oder mehr verschiedene Stufen bei der erweiterten Führungsnut für verschiedene Lichtwellenleiter-Durchmesser vorzusehen. Hierdurch können Lichtwellenleiter mit unterschiedlichen Außendurchmessern zum Spleißen verwendet werden bzw. eine einzige Ausführungsform des Krimpspleißes auch für unterschiedliche Lichtwellenleiter verwendet werden.

Ausführungsbeispiele des Krimpspleißes werden anhand von Figuren näher erläutert.

Es zeigen:
- Fig. 1: eine Seitenansicht des Krimpspleißes,
- Fig. 2: eine Schnittdarstellung des Krimpspleißes,
- Fig. 3: einen fertig montierten Krimpspleiß,
- Fig. 4: eine erste formschlüssige Verbindungsmöglichkeit,
- Fig. 5: eine weitere formschlüssige Verbindungsmöglichkeit,
- Fig. 6: die Verwendung von Sicken zur Erzielung einer weiteren Rasterstufe,
- Fig. 7: die Verwendung eines Quaders oder Hohlkörpers als Innenteil,
- Fig. 8: eine Variante des fertigen Krimpspleißes,
- Fig. 9: eine Variante des Außenteils,
- Fig. 10: eine Ansicht der Führungsnuten
- Fig. 11: eine Draufsicht einer Variante des Außenteils,
- Fig. 12: eine Untersicht der zugehörigen Variante des Innenteils,
- Fig. 13: einen Schnitt des Krimpspleißes mit abgebogenen Schenkeln
- Fig. 14: eine Seitenansicht des Krimpspleißes und
- Fig. 15: Einzelheiten des Krimpspleißes nach der Montage der LWL-Fasern.

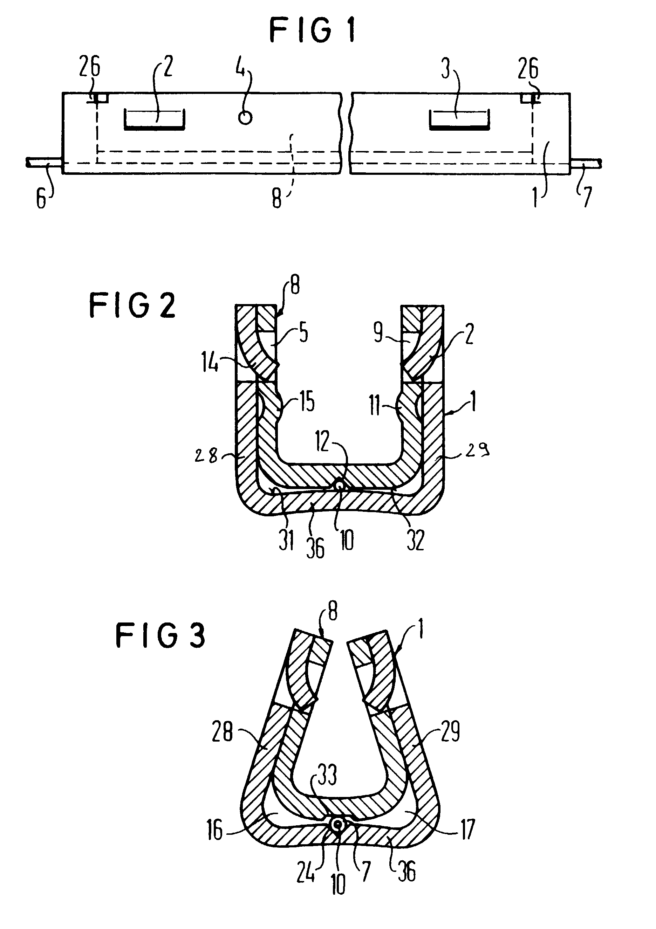

In Figur 1 ist die Seitenansicht eines Krimpspleißes dargestellt. Sein Außenteil 1 ist durch Laschen 2, 3 (und weiteren nicht in dieser Ansicht sichtbaren Laschen) mit einem Innenteil 8 an den Schenkeln verbunden. Zwischen den Grundflächen beider Teile 1 und 8 sind zwei Lichtwellenleiter 6 und 7 fixiert, deren Fasern 10 in einer Führungsnut (aus Gründen der Übersichtlichkeit hier nicht dargestellt) aneinanderstoßen. Das Innenteil wird durch zwei Seitenführungen 26 im Außenteil positioniert.

In Figur 2 ist der Krimpspleiß im Schnitt dargestellt. Das Außenteil 1 wird durch ein Grundteil 36 und die Schenkeln 28 und 29 gebildet. Zwischen den Grundflächen 31 und 32 des Außenteils 1 und des Innenteils 8, die beispielsweise jeweils aus u-förmig oder trapezförmig gebogenen Blechen hergestellt sind, ist in der Mitte der Grundfläche 32 des Innenteils eine Lichtwellenleiter-Faser 10 (Faser: Kern und Mantel) in einer Führungsnut 12 (nur schematisch dargestellt) durch das auf die Faser drückende Außenteil 1 fixiert. Das Innenteil ist mit dem Außenteil durch abgewinkelte Laschen 2 und 14, die in Aussparungen 9 und 5 des Innenteils hineinragen, verbunden. Längssicken 11 und 15, in die die Laschen des Außenteils zunächst hineinragen, sorgen für eine erste Rasterstellung des Innenteils in dem Außenteil, in der die Lichtwellenleiter-Fasern eingeführt werden. In dieser Rasterstellung wird der Krimpspleiß auch zur Montage der Lichtwellenleiter geliefert.

Die Lichtwellenleiter-Fasern 10, deren Coating für eine durch die Abmessungen des Krimpspleißes vorgegebene Länge entfernt wurde, werden in der Führungsnut aneinandergeschoben und dann durch Eindrücken des Innenteiles in die zweite Rasterstellung fixiert in der das Innenteil mit dem Außenteil an den Schenkeln verbunden ist. Anschließend werden die Schenkel des Krimpspleißes zur Erzielung eines höheren radialen Anpreßdruckes zusammengebogen, wodurch das Innenteil gestaucht und das Außenteil gestreckt wird. Die Fixierung erfolgt ganz oder teilweise durch den Druck auf die Lichtwellenleiter-Fasern.

In Figur 3 sind die Schenkel 28 und 29 des Krimpspleißes zusammengebogen. Hierdurch ergeben sich zwei Freiräume 16 und 17, die verhindern, daß die bei der Montage benötigte Ankopplungsflüssigkeit zum Verbinden der Lichtwellenleiter-Fasern durch den Kapillareffekt austritt. Diese Ankopplungsflüssigkeit wird bereits bei der Auslieferung des Krimpspleißes auf die spätere Verbindungsstelle der Lichtwellenleiter aufgetragen.

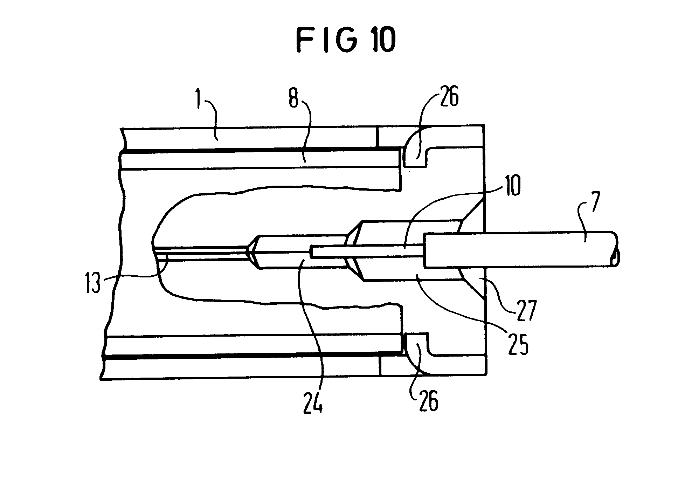

Das Außenteil 1 kann aus jedem plastifizierbarem Material gefertigt werden. Nach dem Zusammenpressen der Schenkel sollen diese nicht zu stark zurückfedern. Für das Innenteil 8 kann dünnes und elastisches Material verwendet werden. So übt es geringe Kräfte auf die Schenkel des Außenteils aus und sorgt für einen gleichbleibenden Anpreßdruck auf die Lichtwellenleiter-Fasern. Die Führungsnut 12 für die Lichtwellenleiter-Faser verläuft hier im Grundteil 36 des Außenteils. Sie ist jedoch aufgrund der Schnittdarstellung, die durch eine erweiterte Führungsnut 24 verläuft, nicht sichtbar, jedoch aus Fig. 10 entnehmbar.

Die erweiterte Führungsnut 24 und eine wegen der Fertigungstoleranzen verbreiterte obere Führungsnut 33 dienen zur Aufnahme des beschichteten Lichtwellenleiters. Durch diese Nuten wird der Lichtwellenleiter zur Erzielung eines Knickschutzes für die jeweilige Faser geführt und gegebenenfalls zur Zugentlastung angepreßt.

Das Innenteil 8 und das Außenteil 1 können durch Einschnitte in die Schenkel und die Bodenfläche so ausgebildet werden, daß eine weitgehend getrennte Anpressung des Coatings und der Faser erfolgt.

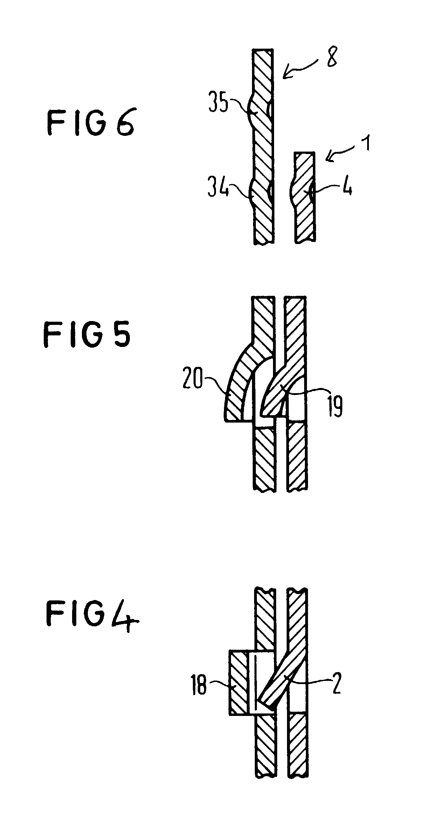

In Figur 4 ist eine weitere Möglichkeit zur Erzielung einer formschlüssigen Verbindung dargestellt. Die Lasche 2 ragt hier in einen Durchzug 18 des Innenteils hinein. Bei einem tiefer angelegten Durchzug oder bei einer Aussparung kann die Lasche auch schräg zur Schenkelebene verlaufen, um stets eine sichere Verbindung zu gewährleisten. Bei der Verwendung von Durchzügen anstelle von Aussparungen wird die mechanische Festigkeit weniger beeinträchtigt.

In Figur 5 greifen zwei Halbsicken 19 una 20 ineinander. Hierdurch wird die mechanische Stabilität des Krimpspleißes weiter erhöht.

In Figur 6 ist eine weitere Möglichkeit zur Erzielung einer weiteren Rasterstellung dargestellt. Eine auch in Figur 1 dargestellte Sicke 4 im Schenkel des Außenteils 1 greift bei der ersten Rasterstellung in eine Sicke 34 des Innenteils 8 ein, bei der zweiten endgültigen Rasterstellung wird sie von einer zweiten Sicke 35 des Innenteils aufgenommen, damit die Schenkel der beiden Teile eng aneinander liegen können.

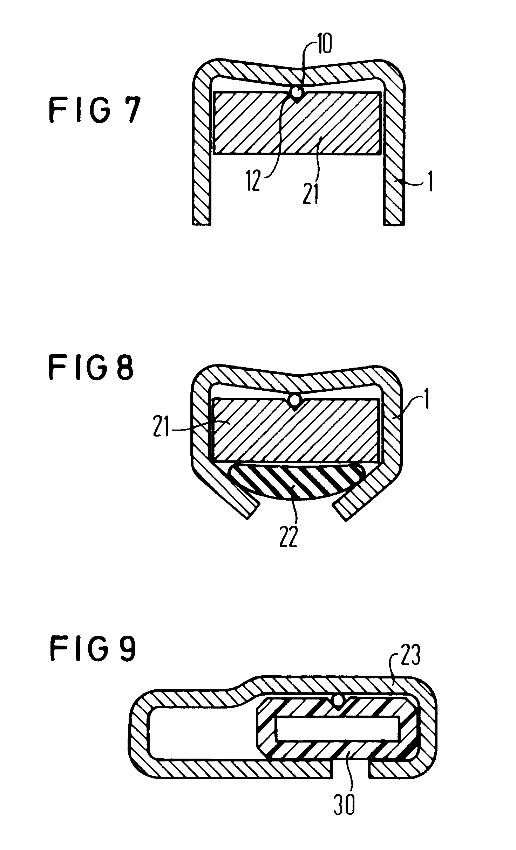

In dem in Figur 7 dargestellten Krimpspleiß ist ein quaderförmiges Innenteil 21 vorgesehen, das auch die Führungsnut 12 zur Aufnahme der Lichtwellenleiter-Faser 10 aufweist. Dies Innenteil kann beispielsweise aus Kunststoff gefertigt werden. Durch Umbiegen der Schenkel des Außenteils 1 werden die Lichtwellenleiter-Fasern fixiert. Um einen konstanten und von der Montage weitgehend unabhängigen Anpreßdruck zu erhalten, kann auch ein elastisches Zwischenteil 22 unter die Schenkel gelegt werden (Figur 8).

In Figur 9 ist ein Krimpspleiß dargestellt, dessen Außenteil 23 eine verbreiterte Grundfläche aufweist. Bei dieser Variante ist ein einfacheres definiertes Anpressen möglich. Die Verbreiterung kann auch beidseitig sein, wenn im Außenteil eine Führung für das Innenteil vorgesehen ist. Das Innenteil ist hier aus einem Hohlprofil 30 gefertigt. Die in den Figuren 7 bis 9 schematisch dargestellte Führungsnut kann entsprechend dem Ausführungsbeispiel nach Figur 3 ausgebildet sein.

In Figur 10 sind die Führungsnuten im Außenteil des Krimpspleißes nach Figur 1 vergrößert und nicht maßstabsgerecht dargestellt. Die erste Führungsnut 12 dient zur Aufnahme der Lichtwellenleiter-Fasern. Die zweite Führungsnut 24 ist für einen Lichtwellenleiter einschließlich Coating mit geringerem Außendurchmesser vorgesehen, und die dritte Führungsnut 25 ist dem Durchmesser eines Lichtwellenleiters mit größerem Außendurchmesser angepaßt.

Die Lichtwellenleiter-Faser kann von oben in die größte Führungsnut eingelegt werden, um dann zum Spleißen in die engeren Führungsnuten eingeschoben zu werden. Durch eine Aufweitung 27 kann auch der Lichtwellenleiter mit Coating leicht in die zweite bzw. dritte Führungsnut eingeschoben werden. Die Führungsnuten einschließlich der Aufweitung können durch Prägung oder Ätzung hergestellt werden. Wie an sich bekannt ist, können die Führungsnuten einen v-förmigen oder trapezförmigen Querschnitt aufweisen und im Außen- oder Innenteil oder in beiden Teilen vorgesehen sein.

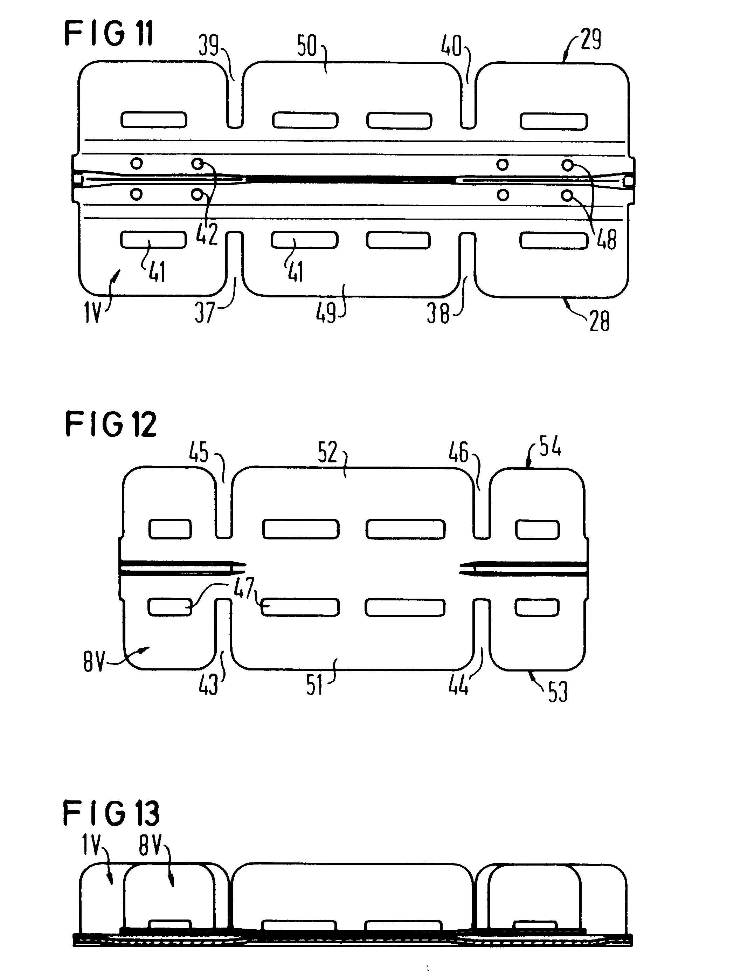

In Figur 11 ist eine Variante 1V des Außenteils dargestellt, bei der die Schenkel 28, 29 durch jeweils zwei Einschnitte 37 und 38 bzw. 39 und 40 in drei Schenkelteile unterteilt sind. Die mittleren Schenkelteile 49 und 50 dienen später zur Erzeugung der nötigen Anpreßkraft für die Lichtwellenleiter-Fasern. Um ein Abbiegen der Schenkelteile zu erleichtern, sind stets förmige Durchbrüche 41 vorgesehen. Es können jedoch auch mehrere Bohrungen verwendet werden. Außerdem weist das Grundteil Abstandshalter 42, 48 auf, die als Sicken ausgebildet sind.

Das in Figur 12 dargestellte Innenteil 8V ist dem Außenteil 1V entsprechend ausgebildet. Die Einschnitte 43 bis 46 in den Schenkeln 53, 54 stimmen nahezu mit den Einschnitten des Außenteils überein. Auch sind wieder entsprechende Durchbrüche 47 vorgesehen, durch die die Schenkeln 53, 54 jeweils in drei Schenkelteile aufgeteilt werden. Die mittleren Schenkelteile 51 und 52 haben beim Innenteil eine etwas größere Länge als beim Außenteil. Die äußeren Schenkelteile des Innenteils sind dagegen kürzer.

In Figur 13 ist ein Schnitt durch die Längsachse des Außenteils 1V mit dem eingesetzten Innenteil 8V bei rechtwinklig hochgebogenen Schenkeln dargestellt. Da die mittleren Schenkelteile des Innenteils geringfügig länger sind als die mittleren Schenkelteile des Außenteils, ist jeweils nur ein schmaler Spalt sichtbar. Außerdem sind die Einführöffnungen für die Lichtwellenleiter-Fasern sichtbar.

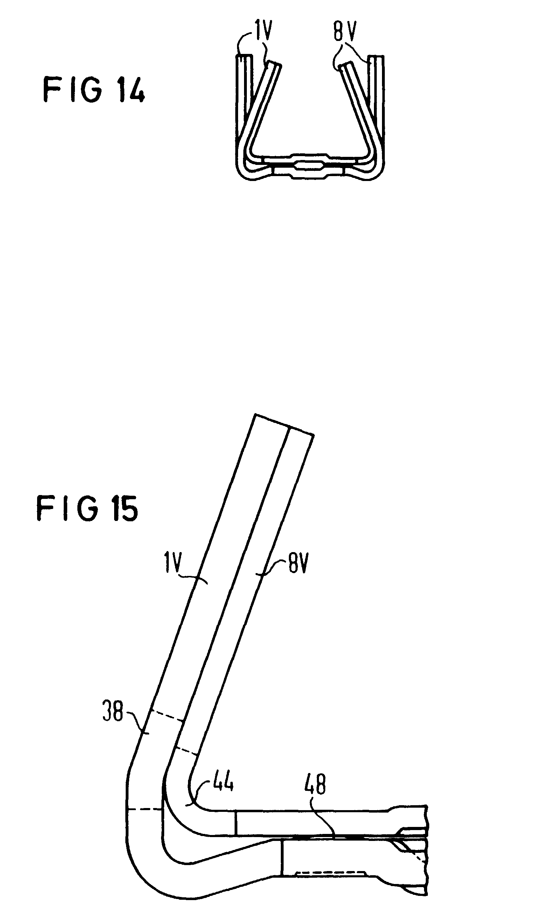

Figur 14 zeigt den Lieferzustand des Krimpspleißes. Die äußeren Schenkelteile sind nach innen abgewinkelt, so daß das Innenteil auch in der Längsrichtung unverrutschbar im Außenteil gehalten wird. Die Lichtwellenleiter-Fasern können in diesem Zustand eingeführt werden. Anschließend werden auch die mittleren Schenkelteile zusammengebogen wie in Fig. 5 dargestellt. Die dadurch entstehenden Druckkräfte im mittleren Teil des Krimpspleißes drücken auf die Lichtwellenleiter-Fasern und fixieren sie. Die äußeren Bereiche des Krimpspleißes können so ausgeführt werden, daß bei einem weiteren Zusammendrücken der äußeren Schenkelteile eine Fixierung des Coatings erfolgt. Je nach verwendeten Materialien kann es zur Vermeidung von durch Temperaturschwankungen bedingten Spannungen zweckmäßiger sein, nur die Lichtwellenleiter-Fasern zu fixieren.

### Bezugszeichenliste

- 1: Außenteil
- 2: Lasche
- 3: Lasche
- 4: Sicke
- 5: Aussparung
- 6: Lichtwellenleiter
- 7: Lichtwellenleiter
- 8: Innenteil
- 9: Aussparung
- 10: Lichtwellenleiter-Faser
- 11: Längssicke
- 12: Führungsnut
- 13: Führungsnut
- 14: Flansch
- 15: Längssicke
- 16: Freiraum
- 17: Freiraum
- 18: Durchzug
- 19: Halbsicke
- 20: Halbsicke
- 21: quaderförmiges Innenteil
- 22: elastisches Zwischenteil
- 23: Außenteil mit verbreiterter Grundfläche
- 24: zweite Führungsnut
- 25: dritte Führungsnut
- 26: Seitenführung
- 27: Aufweitung
- 28, 29: Schenkel
- 30: Hohlprofil-Innenteile
- 31: Grundfläche
- 32: Grundfläche
- 33: Obernut
- 34: Sicke
- 35: Sicke
- 36: Grundteil
- 37, 38,: Einschnitte
- 39, 40: Einschnitte
- 41: Durchbrüche
- 43 - 46: Einschnitte
- 42, 48: Abstandshalter
- 49, 50: mittleres Schenkelteil
- 51, 52: mittleres Schenkelteil
- 53, 54: Schenkel des Innenteils Z

## Patentansprüche

1. Krimpspleiß zum Verbinden zweier Lichtwellenleiter (LWL) (6,7) mit
a) einem länglichen Außenteil (1), das ein als Fläche ausgebildetes Grundteil (36) und zwei abgewinkelte zusammenbiegbare Schenkel (28, 29) aufweist und vor einem Zusammenbiegen der Schenkel etwa einen U-förmigen Querschnitt hat,
b) einem in das Außenteil (1) eingefügten und weiter hineindrückbaren Innenteil (8),
c) einer in Richtung der Längsachse in der zum Innenteil weisenden Grundfläche (31) des Grundteils des Außenteils (1) und/oder in der dieser Grundfläche (31) des Außenteils gegenüberliegenden Grundfläche (32) des Innenteils (8) verlaufenden Führungsnut (12, 13) zur Aufnahme der vom Coating befreiten Ende der Fasern (10) der Lichtwellenleiter (6, 7) und
d) an den Enden des Krimpspleißes durch Vergrößern der Führungsnut (13) erweiterten Führungsnuten (24, 25) jeweils zur Aufnahme eines der mit dem Coating beschichteten Lichtwellenleiter (6, 7),
wobei der Kimpspleiß derart aufgebaut ist, daß er aufeinanderfolgend in drei Stellungen gebracht werden kann:
- in eine erste Stellung, gemäß der das Innenteil in das Außenteil nicht hineingedrückt ist, so daß die LWL-Enden in die Führungsnuten ( 13, 24, 25) eingeführt werden können,
- in eine zweite Stellung, gemäß der das Innenteil in das Außenteil hineingedrückt ist, so daß die eingeführten LWL-Enden zwischen den beiden gegenüberliegenden Grundflächen der beiden Teile vorfixiert sind, und
- in eine dritte Stellung, gemäß der die Schenkel des Außenteils zusammengebogen sind, so daß die vorfixierten LWL-Enden zwischen den beiden gegenüberliegenden Grundflächen der beiden Teile geklemmt sind.

2. Krimpspleiß nach Anspruch 1,
**dadurch gekennzeichnet**,
daß das Innenteil (8) wie das Außenteil (1) zwei biegbare Schenkel (51, 52, 53, 54) aufweist und beide Teile (1, 8) vor einem Zusammenbiegen ihrer Schenkel u-förmige Querschnitte aufweisen.

3. Krimpspleiß nach Anspruch 2,
**dadurch gekennzeichnet**,
daß das Außenteil (1V) und/oder das Innenteil (8V) in den Schenkeln (28, 29; 52, 54) jeweils zwei bis zur Biegelinie reichende Einschnitte (37 bis 40; 43 bis 46) aufweist.

4. Krimpspleiß nach Anspruch 2 oder 3,
**dadurch gekennzeichnet**,
daß das Außenteil (1V) oder/und das Innenteil (8V) parallel zum Grundteil (36) verlaufende Durchbrüche (41; 47) aufweist.

5. Krimpspleiß nach Anspruch 1 oder 2,
**dadurch gekennzeichnet**,
daß das Außenteil (1, 1V) und das Innenteil (8, 8V) miteinander formschlüssig verbindbar sind.

6. Krimpspleiß nach Anspruch 5,
**dadurch gekennzeichnet**,
daß das Innenteil (8) und das Außenteil (1) durch formschlüssige Befestigungen (2, 9, 14, 5) in den Schenkeln (28, 29; 51, 52, 53, 54) miteinander befestigbar sind.

7. Krimpspleiß nach Anspruch 5 oder 6,
**dadurch gekennzeichnet**,
daß formschlüssige Befestigungen (2, 9, 14, 5) an den Schenkeln (51, 52; 28, 29) des Innen- und des Außenteils (8, 1) durch Laschen (2, 3, 14) und Aussparungen (9, 5), Durchzüge (18) oder Sicken (19, 20) vorgesehen sind.

8. Krimpspleiß nach einem der vorherigen Ansprüche,
**dadurch gekennzeichnet**,
daß er nach dem Zusammenbiegen der Schenkel (28, 29) einen dreieckförmigen Querschnitt aufweist.

9. Krimpspleiß nach einem der vorhergehenden Ansprüche,
**dadurch gekennzeichnet**,
daß das Außenteil (1, 1V) und das Innenteil (8, 8V) aus Blechen gefertigt sind und
daß das Außenteil (1, 1V) eine geringere Elastizität als das Innenteil (8, 8V) aufweist.

10. Krimpspleiß nach Anspruch 1,
**dadurch gekennzeichnet**,
daß ein quaderförmig ausgebildetes Innenteil (21) oder ein Hohlprofil-Innenteil (30) vorgesehen ist.

11. Krimpspleiß nach einem der vorhergehenden Ansprüche, **dadurch gekennzeichnet**,
daß das Außenteil (1, 1V) und das Inntenteil (8, 8V) unterschiedlich lang sind,
und daß zumindest das längere Teil (1, 1V) eine Führungsnut aufweist.

12. Kimpspleiß nach einem der vorhergehenden Ansprüche,
**dadurch gekennzeichnet**,
daß die Grundfläche (31) des Außenteils (1, 1V) nach innen gewölbt ist oder/und daß die Grundfläche (32) des Innenteils (8, 8V) nach außen gewölbt ist.

13. Krimpspleiß nach einem der vorhergehenden Ansprüche,
**dadurch gekennzeichnet**,
daß die erste Stellung in der die Lichtwellenleiter-Fasern (10) eingeführt werden können durch erste Rastmittel zwischen Außenteil (1, 1V) und Innenteil (8, 8V) ausgebildet ist und die zweite Stellung in der die Lichtwellenleiter-Fasern (10) bereits durch Klemmung zwischen beiden Teilen (1, 8, 1V, 8V) vorfixiert sind, durch zweite Rastmittel ausgebildet ist, in der das Außenteil (1, 1V) und das Innenteil (8, 8V) miteinander formschlüssig verbunden sind.

14. Krimpspleiß nach einem der vorhergehenden Ansprüche,
**dadurch gekennzeichnet**,
daß die Führungsnut (13) für die Lichtwellenleiter-Fasern (10) an jedem Ende des Krimpspleißes mindestens in zwei weitere unterschiedlich große Führungsnuten (24, 25) übergeht, die zur Aufnahme von mit ihrem Coatin beschichteten Lichtwellenleitern (6, 7) von unterschiedlichen Außendurchmessern dient.

15. Kimpspleiß nach einem der vorhergehenden Ansprüche,
**dadurch gekennzeichnet**,
daß das Außenteil (1, 1V) und gegebenenfalls das Innenteil (8, 8V) aus Blech mit geringem Temperatur-Ausdehnungskoeffizienten gefertigt ist.

16. Krimpspleiß nach Anspruch 10,
**dadurch gekennzeichnet**,
daß zwischen dem Innenteil (21) und den zusammengebogenen Schenkeln (28, 29) des Außenteils (1) ein elastisches Zwischenteil (22) angeordnet ist.

17. Krimpspleiß nach Anspruch 10,
**dadurch gekennzeichnet**,
daß das Außenteil (23) eine breitere Grundfläche als das Innenteil (30) aufweist.

## Claims

1. Crimp splice for connecting two optical waveguides (OWG) (6, 7), having
a) an elongated outer part (1), which has a base part (36) designed as a surface and two angled limbs (28, 29) that can be bent together and, before the limbs are bent together, has an approximately U-shaped cross-section,
b) an inner part (8), which is inserted into the outer part (1) and can be pressed in further,
c) a guide groove (12, 13), which runs in the direction of the longitudinal axis in that base surface (31) of the base part of the outer part (1) which points towards the inner part, and/or in that base surface (32) of the inner part (8) which lies opposite this base surface (31) of the outer part, in order to accommodate the ends, freed of the coating, of the fibres (10) of the optical waveguides (6, 7), and
d) guide grooves (24, 25), which are widened at the ends of the crimp splice by enlarging the guide groove (13), in each case in order to accommodate an optical waveguide (6, 7) coated with the coating,
the crimp splice being constructed such that it can be brought successfully into three positions:
- into a first position, in which the inner part is not pressed into the outer part, so that the OWG ends can be inserted into the guide grooves (13, 24, 25),
- into a second position, in which the inner part is pressed into the outer part, so that the inserted OWG ends are pre-fixed between the two opposite base surfaces of the two parts, and
- into a third position, in which the limbs of the outer part are bent together, so that the pre-fixed OWG ends are clamped between the two opposite base surfaces of the two parts.

2. Crimp splice according to Claim 1, characterized in that the inner part (8), like the outer part (1); has two limbs (51, 52, 53, 54) that can be bent, and the two parts (1, 8), before their limbs are bent together, have U-shaped cross-sections.

3. Crimp splice according to Claim 2, characterized in that the outer part (1V) and/or the inner part (8V) each has, in the limbs (28, 29; 52, 54), two cuts (37 to 40; 43 to 46) that reach as far as the bending line.

4. Crimp splice according to Claim 2 or 3, characterized in that the outer part (1V) and/or the inner part (8V) has apertures (41; 47) that run parallel to the base part (36).

5. Crimp splice according to Claim 1 or 2, characterized in that the outer part (1, 1V) and the inner part (8, 8V) can be connected to each other in a positively-locking manner.

6. Crimp splice according to Claim 5, characterized in that the inner part (8) and the outer part (1) can be fastened to each other by means of positively-locking fastenings (2, 9, 14, 5) in the limbs (28, 29; 51, 52, 53, 54).

7. Crimp splice according to Claim 5 or 6, characterized in that positively-locking fastenings (2, 9, 14, 5) on the limbs (51, 52; 28, 29) of the inner and outer parts (8, 1) are provided by means of tabs (2, 3, 14) and cut-outs (9, 5), pulled-out sections (18) or beads (19, 20).

8. Crimp splice according to one of the preceding claims, characterized in that, after the limbs (28, 29) have been bent together, it has a triangular cross-section.

9. Crimp splice according to one of the preceding claims, characterized in that the outer part (1, 1V) and the inner part (8, 8V) are produced from sheet metal, and in that the outer part (1, 1V) has a lower elasticity than the inner part (8, 8V).

10. Crimp splice according to Claim 1, characterized in that an inner part (21) of box-like design or an inner part (30) with a hollow profile is provided.

11. Crimp splice according to one of the preceding claims, characterized in that the outer part (1, 1V) and the inner part (8, 8V) are of different lengths, and in that at least the longer part (1, 1V) has a guide groove.

12. Crimp splice according to one of the preceding claims, characterized in that the base surface (31) of the outer part (1, 1V) is curved inwards and/or in that the base surface (32) of the inner part (8, 8V) is curved outwards.

13. Crimp splice according to one of the preceding claims, characterized in that the first position, in which the optical waveguide fibres (10) can be inserted, is formed by means of first latching means between the outer part (1, 1V) and inner part (8, 8V), and the second position, in which the optical waveguide fibres (10) are pre-fixed by being clamped between the two parts (1, 8, 1V, 8V), is formed by means of second latching means, in which the outer part (1, 1V) and the inner part (8, 8V) are connected to each other in a positively-locking manner.

14. Crimp splice according to one of the preceding claims, characterized in that the guide groove (13) for the optical waveguide fibres (10) merges at each end of the crimp splice at least into two further guide grooves (24, 25) of different sizes, which serve to accommodate optical waveguides (6, 7), covered with their coating, of different external diameters.

15. Crimp splice according to one of the preceding claims, characterized in that the outer part (1, 1V) and, if appropriate, the inner part (8, 8V) is or are produced from sheet metal having a low coefficient of thermal expansion.

16. Crimp splice according to Claim 10, characterized in that an elastic intermediate piece (22) is arranged between the inner part (21) and the bent-together limbs (28, 29) of the outer part (1).

17. Crimp splice according to Claim 10, characterized in that the outer part (23) has a broader base surface than the inner part (30).

## Revendications

1. Epissure de sertissage pour raccorder deux guides d'ondes lumineuses (6, 7) comprenant
a) une pièce extérieure (1) oblongue qui comporte une partie de base (36) réalisée comme surface et deux branches (28, 29) coudées et pouvant être repliées l'une vers l'autre et qui a une section transversale sensiblement en forme de U avant que les branches soient repliées,
b) une pièce intérieure (8) insérée dans la pièce extérieure (1) en pouvant y être enfoncée davantage,
c) une rainure de guidage (12, 13) qui s'étend en direction de l'axe longitudinal dans la surface de base (31), tournée vers la pièce intérieure, de la partie de base de la pièce extérieure (1) et/ou dans la surface de base (32), située à l'opposé de cette surface de base (31) de la pièce extérieure, de la pièce intérieure (8) et qui est destinée à recevoir l'extrémité dégagée de la gaine des fibres (10) des guides d'ondes lumineuses (6, 7) et
d) aux extrémités de l'épissure de sertissage, des rainures de guidage (24, 25) élargies par agrandissement de la rainure de guidage (13) et destinées chacune à recevoir l'un des guides d'ondes lumineuses (6, 7) pourvus de la gaine,
l'épissure de sertissage étant construite de telle manière qu'elle peut être amenée successivement dans trois positions :
- dans une première position dans laquelle la pièce intérieure n'est pas enfoncée dans la pièce extérieure de sorte que les extrémités des guides d'ondes lumineuses peuvent être introduites dans les rainures de guidage (13, 24, 25),
- dans une deuxième position dans laquelle la pièce intérieure est enfoncée dans la pièce extérieure de sorte que les extrémités introduites des guides d'ondes lumineuses sont pré-fixées entre les deux surfaces de base situées en vis-à-vis des deux pièces, et
- dans une troisième position dans laquelle les branches de la pièce extérieure sont repliées l'une vers l'autre de sorte que les extrémités pré-fixées des guides d'ondes lumineuses sont bloquées entre les deux surfaces de base situées en vis-à-vis des deux pièces.

2. Epissure de sertissage selon la revendication 1,
caractérisée en ce
que la pièce intérieure (8) comme la pièce extérieure (1) comportent deux branches (51, 52, 53, 54) flexibles et les deux pièces (1, 8) présentent des sections transversales en forme de U avant que leurs branches soient repliées l'une vers l'autre.

3. Epissure de sertissage selon la revendication 2,
caractérisée en ce
que la pièce extérieure (1V) et/ou la pièce intérieure (8V) présente dans les branches (28, 29 52, 54) des entailles (37 à 40 ; 43 à 46) qui vont jusqu'à la ligne de pliage.

4. Epissure de sertissage selon la revendication 2 ou 3,
caractérisée en ce
que la pièce extérieure (1V) ou/et la pièce intérieure (1V) présentent des ouvertures (41 ; 47) qui s'étendent parallèlement à la partie de base (36).

5. Epissure de sertissage selon la revendication 1 ou 2,
caractérisée en ce
que la pièce extérieure (1, 1V) et la pièce intérieure (8, 8V) peuvent être assemblées entre elles par complémentarité de formes.

6. Epissure de sertissage selon la revendication 5,
caractérisée en ce
que la pièce intérieure (8) et la pièce extérieure (1) peuvent être fixées entre elles par des dispositifs de fixation (2, 9, 14, 5) à complémentarité de formes dans les branches (28, 29 51, 52, 53, 54).

7. Epissure de sertissage selon la revendication 5 ou 6,
caractérisée en ce
que des dispositifs de fixation (2, 9, 14, 5) à complémentarité de formes sont prévus sur les branches (51, 52 ; 28, 29) de la pièce intérieure (8) et de la pièce extérieure (1) sous forme de pattes (2, 3, 14) et d'évidements (9, 5), de crevées (18) ou de moulures (19, 20).

8. Epissure de sertissage selon l'une des revendications précédentes,
caractérisée en ce
qu'elle présente une section triangulaire une fois les branches (28, 29) repliées l'une vers l'autre.

9. Epissure de sertissage selon l'une des revendications précédentes,
caractérisée en ce
que la pièce extérieure (1, 1V) et la pièce intérieure (8, 8V) sont fabriquées à partir de tôles et que la pièce extérieure (1, 1V) a une élasticité plus réduite que la pièce intérieure (8, 8V).

10. Epissure de sertissage selon la revendication 1,
caractérisée en ce
qu'il est prévu une pièce intérieure (21) parallélépipèdique ou une pièce intérieure (30) réalisée sous la forme d'un profilé creux.

11. Epissure de sertissage selon l'une des revendications précédentes,
caractérisée en ce
que la pièce extérieure (1, 1V) et la pièce intérieure (8, 8V) ont des longueurs différentes,
et qu'au moins la pièce (1, 1V) la plus longue comporte une rainure de guidage.

12. Epissure de sertissage selon l'une des revendications précédentes,
caractérisée en ce
que la surface de base (31) de la pièce extérieure (1, 1V) est bombée vers l'intérieur et/ou que la surface de base (32) de la pièce intérieure (8, 8V) est bombée vers l'extérieur.

13. Epissure de sertissage selon l'une des revendications précédentes,
caractérisée en ce
que la première position, dans laquelle les fibres (10) de guides d'ondes lumineuses peuvent être introduites, est obtenue par des premiers moyens de blocage entre la pièce extérieure (1, 1V) et la pièce intérieure (8, 8V) et la deuxième position, dans laquelle les fibres (10) de guides d'ondes lumineuses sont déjà pré-fixées par serrage entre les deux pièces (1, 8, 1V, 8V), est obtenue par des seconds moyens de blocage, position dans laquelle la pièce extérieure (1, 1V) et la pièce intérieure (8, 8V) sont reliées entre elles par complémentarité de formes.

14. Epissure de sertissage selon l'une des revendications précédentes,
caractérisée en ce
que la rainure de guidage (13) pour les fibres (10) de guides d'ondes lumineuses se prolonge à chaque extrémité de l'épissure de sertissage au moins par deux autres rainures de guidage (24, 25) de tailles différentes qui servent à recevoir des guides d'ondes lumineuses (6, 7) de différents diamètres extérieurs pourvus d'un revêtement.

15. Epissure de sertissage selon l'une des revendications précédentes, caractérisée en ce
que la pièce extérieure (1, 1V) et éventuellement la pièce intérieure (8, 8V) est fabriquée en une tôle présentant un faible coefficient de dilatation thermique.

16. Epissure de sertissage selon la revendication 10,
caractérisée en ce
qu'une pièce intermédiaire (22) élastique est disposée entre la pièce intérieure (21) et les branches (28, 29) repliées de la pièce extérieure (1).

17. Epissure de sertissage selon la revendication 10,
caractérisée en ce
que la pièce extérieure (23) présente une surface de base plus large que la pièce intérieure (30).
